# EUROPEAN PATENT APPLICATION

(11) **EP 4 534 451 A1**
(43) Date of publication of application: **09.04.2025**
(21) Application number: 23816055.0
(22) Date of filing: 30.05.2023
(51) Int. Cl.: B65G 1/04, B65G 1/137

(54) **INFORMATION PROCESSING DEVICE, INFORMATION PROCESSING METHOD, PROGRAM, SYSTEM, AND COMPUTER-READABLE STORAGE MEDIUM**

(30) Priority: 31.05.2022 JP 2022088599
(71) Applicant: Kabushiki Kaisha Toshiba, Tokyo 105-0023 (JP); TOSHIBA INFRASTRUCTURE SYSTEMS & SOLUTIONS CORPORATION, Saiwai-ku Kawasaki-shi Kanagawa 212-0013 (JP)
(72) Inventor: TOMOKUNI, Takashi, Kawasaki-shi, Kanagawa 212-0013 (JP)
(74) Representative: Horn Kleimann Waitzhofer Schmid-Dreyer Patent- und Rechtsanwälte PartG mbB
(86) International application number: PCT/JP2023/020106
(87) International publication number: WO 2023/234298

(57) **Abstract**

An information processing apparatus, an information processing method, a program and a system capable of effectively changing a height at which an article is stored are provided. According to the embodiment, an information processing apparatus includes a first interface, a second interface, and a processor. The first interface acquires a retrieval order for picking articles from cases. The second interface is connected to a takeout device configured to swap the cases stored at different heights. The processor selects two of the cases stored at different heights based on the retrieval order and causes the takeout device to swap the selected two cases through the second interface.

## Description

### FIELD

Embodiments described herein relate generally to an information processing apparatus, an information processing method, a program, a system, and a computer-readable storage medium.

### BACKGROUND

In recent years, a system for transporting racks that store articles to a workstation using automated transport vehicles has been provided. At the workstation, an operator picks the articles from the racks transported by the automated transport vehicles.

When an article to be picked is stored on an upper side of the rack, the operator needs to use a ladder or the like, increasing the time required for picking.

Furthermore, when an expensive article that does not need to be picked is stored on a lower side of the operator's reach, the risk of theft increases.

### CITATION LIST

### PATENT LITERATURE

Patent Document 1: Japanese Patent No. 4423616

### SUMMARY

### TECHNICAL PROBLEM

To solve the above-described problem, an information processing apparatus, an information processing method, a program, a system, and a computer-readable storage medium capable of effectively changing a height at which an article is stored are provided.

### SOLUTION TO PROBLEM

According to an embodiment, an information processing apparatus includes a first interface, a second interface, and a processor. The first interface acquires a retrieval order for picking articles from cases. The second interface is connected to a takeout device that swaps the cases stored at different heights. The processor selects, based on the retrieval order, two of the cases stored at different heights, and causes the takeout device to swap the selected two cases through the second interface.

### BRIEF DESCRIPTION OF THE DRAWINGS

FIG. 1 is a diagram schematically illustrating a configuration example of a control system according to an embodiment.
FIG. 2 is a diagram schematically illustrating a configuration example of an AGV rack according to the embodiment.
FIG. 3 is a block diagram illustrating a configuration example of the control system according to the embodiment.
FIG. 4 is a block diagram illustrating a configuration example of a WES according to the embodiment.
FIG. 5 is a block diagram illustrating a configuration example of an AGV according to the embodiment.
FIG. 6 is a diagram schematically illustrating a configuration example of a takeout device according to the embodiment.
FIG. 7 is a block diagram illustrating a configuration example of the takeout device according to the embodiment.
FIG. 8 is a diagram illustrating an operation example of the takeout device according to the embodiment.
FIG. 9 is a flowchart illustrating an operation example of the WES according to the embodiment.
FIG. 10 is a flowchart illustrating an operation example of the takeout device according to the embodiment.

### DETAILED DESCRIPTION

Hereinafter, embodiments will be described with reference to the drawings.

A control system according to the embodiment picks articles from racks in a physical distribution system or the like. The control system uses automated guided vehicles (AGVs) to transport AGV racks to workstations. The control system picks articles from the AGV racks at the workstations. The control system causes an operator or a robot to pick articles from the AGV racks.

For example, the control system is used in a physical distribution center, a warehouse, or the like.

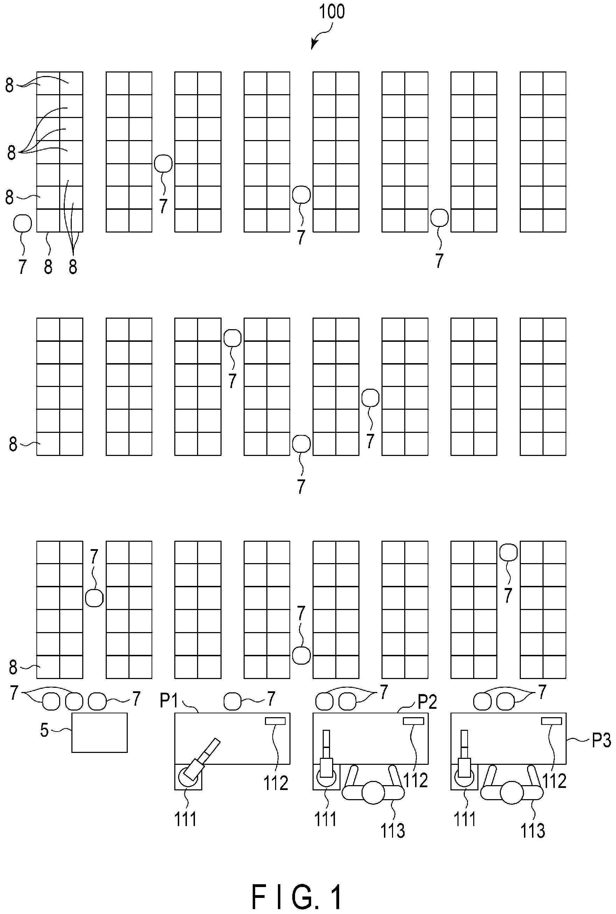

FIG. 1 is a diagram illustrating a configuration example of a control system 100 according to the embodiment.

As shown in FIG. 1, the control system 100 includes a workstation P (P1 to P3), a takeout device 5, an AGV 7, an AGV rack 8, a picking robot 111, a display device 112, and the like.

Each of the workstations P1 to P3 is provided with the picking robot 111 and the display device 112. The control system can operate the picking robot 111 to pick articles using the picking robot 111 at each of the workstations P1 to P3. The control system can also stop the operation of the picking robot 111, allocate an operator 113, and cause the operator 113 to pick articles. The operator 113 can handle the articles while visually confirming an article handling schedule or the like displayed on the display device 112. The display device 112 may be a wireless communication terminal assigned to the operator 113.

The workstations P1 to P3 may be provided with the display devices 112, and some of the workstations may be provided with the picking robots 111. In this case, the workstation not provided with the picking robot 111 is used as a workstation for the operator 113. The workstation provided with the picking robot 111 can be used as a workstation for the picking robot 111 or a workstation for the operator 113.

The control system 100 may include a plurality of cameras. Further, one or several cameras among the plurality of cameras may be fixed cameras and the remaining cameras may be movable cameras. The fixed camera is a camera fixed to, for example, a ceiling, a wall surface, and a top surface and a side surface or the like that face the workstations P1 to P3. The camera captures the entire warehouse and articles handled in the warehouse, and outputs captured data in real time. The captured data includes captured date and time data (including captured time) and captured image data. The captured image data is still image data and moving image data. In addition, the fixed camera may rotate vertically and horizontally based on an image-capturing control signal from a WES 10 described later. By rotating the fixed camera vertically and horizontally, the inside of the warehouse can be monitored over a wide range.

The AGV 7 operates based on a control signal from a rack transport system 20 described later. For example, the AGV 7 travels toward a designated loading position and lifts an AGV rack 8 at the designated loading position. The AGV 7 travels toward a designated unloading position and unloads an AGV rack 8 at the designated unloading position.

The AGV rack 8 is a rack for storing an article. The AGV rack 8 includes two or more sections of different heights. For example, the AGV rack 8 is formed by a plurality of tiers. The AGV rack 8 includes a case for storing an article on each tier.

The AGV rack 8 stands upright on four posts. The height of an under-rack space below the AGV rack 8 (the height from the floor surface to the bottom of the rack) is higher than the height of the AGV 7. Accordingly, the AGV 7 can enter the under-rack space below the AGV rack 8. The AGV 7 which has entered the under-rack space lifts the AGV rack 8 with a pusher to such an extent that the distal ends of the posts are separated from the floor surface by several centimeters, and travels in a state in which the AGV rack 8 is being lifted. In this way, the AGV 7 transports the AGV rack 8.

To the AGV rack 8, rack identification information that can be read by a fixed camera, a movable camera, or the like may be attached. To the article as well, article identification information that can be read by a fixed camera, a mobile camera, or the like may be attached. For example, the rack identification information and the article identification information are bar codes or two-dimensional codes. The control system may include a plurality of readers that read the rack identification information and the article identification information separately from the fixed camera or the movable camera.

The AGV rack 8 will be described in detail later.

The workstations P1 to P3 receive the AGV racks 8 transported by the AGVs 7. In the AGV racks 8 received at the workstations P1 to P3, articles are stored. If article handling by the picking robot 111 is designated, the picking robot 111 grips and picks an article stored in the AGV rack 8. If article handling by the operator 113 is designated, the allocated operator 113 manually grips and picks an article stored in the AGV rack 8. The display devices 112 provided corresponding to the workstations P1 to P3 display information for supporting the picking operation of the operator 113, for example, an image of the article to be handled, and article identification information, in addition to the article handling schedule. The operator 113 visually checks display contents of the display device 112 and picks the article.

At the workstations P1 to P3, articles may be stored in the AGV racks 8 using the picking robot 111 or the operator 113.

The takeout device 5 swaps the cases stored at different heights in the AGV rack 8 under the control of the WES 10. That is, the takeout device 5 exchanges the positions of the cases stored in the AGV rack 8. The takeout device 5 swaps the cases stored in the AGV rack 8 transported by the AGV 7. The takeout device 5 may take out the case from the AGV rack 8 in order to pick an article under the control of the WES 10.

The takeout device 5 will be described in detail later.

Next, the AGV rack 8 will be described.

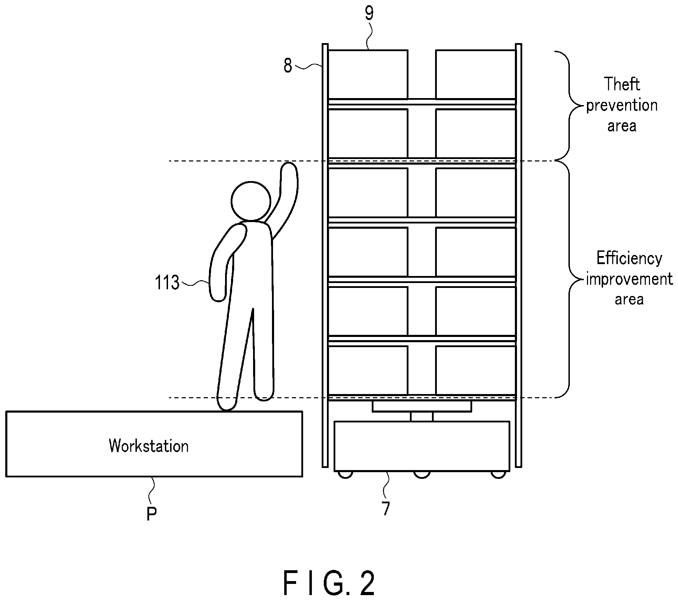

FIG. 2 shows an example of the AGV rack 8 transported to the workstation P by the AGV 7.

Herein, the AGV rack 8 is loaded on the AGV 7. It is assumed that the AGV rack 8 is transported to a position where the operator 113 can pick an article.

As shown in FIG. 2, the AGV rack 8 includes a plurality of cases 9. The AGV rack 8 is provided with a plurality of tiers, and each tier stores the cases 9. Herein, each tier stores two cases 9.

In the AGV rack 8, the cases 9 are stored at a height that the operator 113 can reach without using a ladder or the like and at a position higher than the above-described height.

Herein, a range which is a region in which the AGV rack 8 stores the cases 9 and which the operator 113 can reach without using a ladder or the like is referred to as an efficiency improvement area. That is, the efficiency improvement area is an area in which the operator 113 can pick an article without using a ladder or the like. The efficiency improvement area is an area lower than a predetermined height (a height that the operator 113 can reach) .

Furthermore, a range which is a region in which the AGV rack 8 stores the cases 9 and which is higher than the efficiency improvement area is referred to as a theft prevention area. That is, the theft prevention area is an area in which the operator 113 cannot pick an article unless the operator uses a ladder or the like. The theft prevention area is an area higher than a predetermined height (a height that the operator 113 can reach).

Next, a control system of the control system 100 will be described.

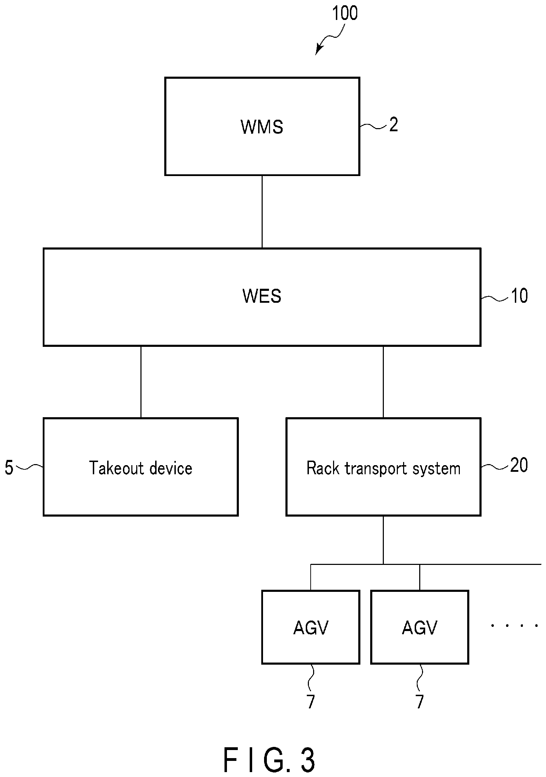

FIG. 3 is a block diagram illustrating a configuration example of a control system of the control system 100 according to the embodiment. As shown in FIG. 3, the control system 100 includes a WMS 2, a takeout device 5, an AGV 7, a WES 10, a rack transport system 20, and the like.

The WES 10 is connected to the WMS 2, the takeout device 5, and the rack transport system 20. The rack transport system 20 is connected to the AGV 7.

The WMS 2 (Warehouse Management System) is called a warehouse management system and can be realized by one or more computers. The WMS 2 transmits a retrieval order to the WES 10 to provide an instruction to pick an article from the AGV rack 8. The WMS 2 may transmit a storage order to the WES 10 to provide an instruction to store an article in the AGV rack 8.

The WMS 2 stores article information on articles. The article information indicates a name, ID, price, theft risk, and the like of an article. The theft risk is an index indicating an ease of theft of an article. For example, the theft risk is a value from 0 (no risk) to 5 (maximum risk). The theft risk is set based on an operator's operation. The theft risk may be set by the WMS 2 based on the price, outer dimension, weight, and the like of the article.

The WMS 2 transmits the article information to the WES 10 in response to a request from the WES 10.

The WES 10 (warehouse execution system) (information processing apparatus) is called a warehouse operation management system and can be realized by one or more computers. The WES 10 controls the takeout device 5, the rack transport system 20, and the like based on the retrieval order from the WMS 2. The WES 10 will be described in detail later.

The rack transport system 20 controls the AGV 7 under the control of the WES 10. For example, the rack transport system 20 transports the AGV rack 8 to the workstation P using the AGV 7. The rack transport system 20 returns the AGV rack 8 from the workstation P using the AGV 7.

The rack transport system 20 stores in advance inventory information indicating articles stored in the cases 9 of each AGV rack 8. For example, the inventory information stores an identifier of the AGV rack 8, a position (height) of the case 9 stored in the AGV rack 8, an identifier indicating an article stored in the case 9, and the like in association with each other.

Upon receiving a retrieval order for retrieving a predetermined article from the WES 10, the rack transport system 20 specifies an AGV rack 8 storing the article by referring to the inventory information.

Upon specifying the AGV rack 8, the rack transport system 20 transports the specified AGV rack 8 to one of the workstations P using the AGV 7. The rack transport system 20 causes an operator or a robot to pick the article from the case 9 of the transported AGV rack 8.

The rack transport system 20 transports the AGV rack 8 to the takeout device 5 under the control of the WES 10. That is, the rack transport system 20 transports the AGV rack 8 to a position where the takeout device 5 can swap the case 9.

The rack transport system 20 transmits the inventory information to the WES 10 in response to a request from the WES 10 or at a predetermined timing.

Next, the WES 10 will be described.

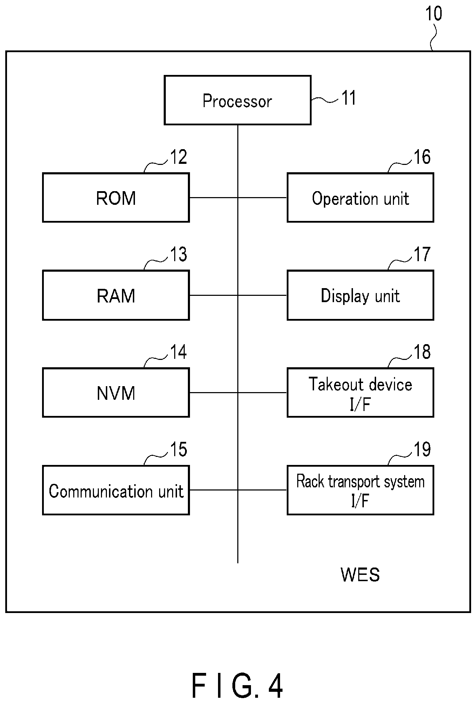

FIG. 4 is a block diagram illustrating a configuration example of the WES 10. As shown in FIG. 4, the WES 10 includes a processor 11, a ROM 12, a RAM 13, an NVM 14, a communication unit 15, an operation unit 16, a display unit 17, a takeout device interface 18, a rack transport system interface 19, and the like.

The processor 11, the ROM 12, the RAM 13, the NVM 14, the communication unit 15, the operation unit 16, the display unit 17, the takeout device interface 18, and the rack transport system interface 19 are connected to each other via a data bus or the like.

The WES 10 may include other configurations as needed in addition to the configuration illustrated in FIG. 4, or a specific configuration may be excluded from the WES 10.

The processor 11 (second processor) has a function of controlling the operation of the entire WES 10. The processor 11 may include an internal cache, various interfaces, and the like. The processor 11 realizes various processes by executing programs stored in advance in the internal memory, the ROM 12, or the NVM 14.

Some of the various functions realized by the processor 11 executing the programs may be realized by a hardware circuit. In this case, the processor 11 controls the functions executed by the hardware circuit.

The ROM 12 is a nonvolatile memory in which a control program, control data and the like are stored in advance. The control program and the control data stored in the ROM 12 are incorporated in advance according to the specifications of the WES 10.

The RAM 13 is a volatile memory. The RAM 13 temporarily stores data, etc. being processed by the processor 11. The RAM 13 stores various application programs based on instructions from the processor 11. The RAM 13 may store data necessary for executing the application program, an execution result of the application program, etc.

The NVM 14 is a data-writable and rewritable nonvolatile memory. For example, the NVM 14 is configured by a hard disk drive (HDD), a solid-state drive (SSD), a flash memory, or the like. The NVM 14 stores control programs, applications, and various kinds of data according to the operation purpose of the WES 10.

The communication unit 15 (first interface) is an interface that transmits and receives data to and from the WMS 2 or the like. For example, the communication unit 15 supports wired or wireless local area network (LAN) connection.

The operation unit 16 receives various operation inputs from the operator. The operation unit 16 transmits a signal indicating the input operation to the processor 11. For example, the operation unit 16 is configured by a mouse, a keyboard, a touch panel, or the like.

The display unit 17 displays image data from the processor 11. For example, the display unit 17 is configured by a liquid crystal monitor. When the operation unit 16 is configured by a touch panel, the display unit 17 may be formed integrally with the touch panel as the operation unit 16.

The takeout device interface 18 (second interface) is an interface that transmits and receives data to and from the takeout device 5. The takeout device interface 18 is connected to the takeout device 5 via a network or the like. For example, the takeout device interface 18 supports wired or wireless LAN connection.

The rack transport system interface 19 (third interface) is an interface that transmits and receives data to and from the rack transport system 20. The rack transport system interface 19 is connected to the rack transport system 20 via a network or the like. For example, the rack transport system interface 19 supports wired or wireless LAN connection.

The communication unit 15, the takeout device interface 18, and the rack transport system interface 19 (or some of them) may be integrally formed.

Next, the AGV 7 will be described.

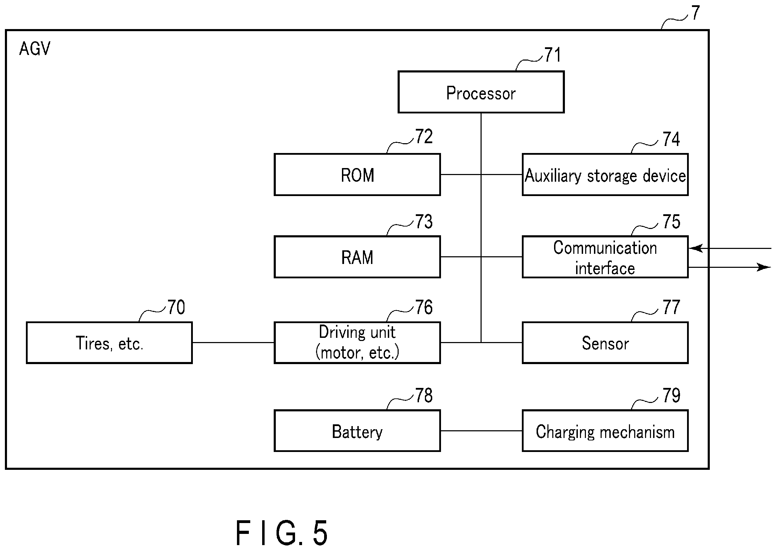

FIG. 5 is a block diagram illustrating a configuration example of the AGV 7 according to the embodiment.

The AGV 7 includes a processor 71, a ROM 72, a RAM 73, an auxiliary storage device 74, a communication interface 75, a driving unit 76, a sensor 77, a battery 78, a charging mechanism 79, tires 70, and the like.

The processor 71 has a function of controlling the operation of the entire AGV 7. The processor 71 may include an internal cache, various interfaces, and the like. The processor 71 realizes various processes by executing programs stored in advance in the ROM 72 or the auxiliary storage device 74.

For example, the processor 71 is a CPU. The processor 71 may be realized by hardware such as a large-scale integration (LSI), an application-specific integrated circuit (ASIC), or a field-programmable gate array (FPGA).

The processor 71 performs processing such as calculation and control necessary for operations of acceleration, deceleration, stopping, direction change, loading and unloading of the AGV rack 8, and the like. The processor 71 executes a program stored in the ROM 72 or the like based on a control signal from the rack transport system 20 or the like to generate and output a driving signal to each unit.

For example, the rack transport system 20 transmits a control signal for moving the AGV 7 from a current position to a first position (a rack arrangement position of the target AGV rack 8) and from the first position to a second position (a position of the target workstation P). The rack transport system 20 transmits a control signal for moving the AGV 7 from the second position to the first position. The processor 71 of the AGV 7 outputs a driving signal in response to the control signal transmitted from the rack transport system 20. Thereby, the AGV 7 moves from the current position to the first position, from the first position to the second position, and from the second position to the first position. The processor 71 outputs a driving signal in response to an instruction to load or unload the AGV rack 8 included in the control signal transmitted from the rack transport system 20. Thereby, the AGV 7 lifts the AGV rack 8 by the pusher and lowers the lifted AGV rack 8.

The ROM 72 is a non-transitory computer-readable storage medium, and stores the programs described above. The ROM 72 stores data used by the processor 71 to perform various processes or various setting values and the like. The RAM 73 is a memory used for reading and writing data. The RAM 73 is used as a so-called work area or the like which the processor 71 temporarily uses in performing various processes.

The auxiliary storage device 74 is a non-transitory computer-readable storage medium, and may store the programs described above. The auxiliary storage device 74 stores data used by the processor 71 to perform various processes, data generated through the process performed by the processor 71, or various setting values and the like.

The communication interface 75 is an interface that transmits and receives data to and from the rack transport system 20 and the like through a wireless LAN access point or the like. For example, the communication interface 75 supports wireless LAN connection.

The driving unit 76 is a motor or the like, and rotates or stops the motor based on a driving signal output from the processor 71. The power of the motor is transmitted to the tires 70 and then to a steering mechanism. The AGV 7 is moved to a target position by the power from such a motor. The driving unit 76 functions as a transport mechanism for transporting the AGV 7 and the AGV rack 8.

In addition, with the AGV 7 entering the under-rack space of the AGV rack 8, the driving unit 76 rotates (normally rotates) the motor based on the driving signal output from the processor 71. The pusher is uplifted by the power from the motor, lifting the AGV rack 8. After the AGV 7 reaches the target position, the driving unit 76 rotates (reversely rotates) the motor based on the driving signal output from the processor 71. The pusher is lowered by the power from the motor, lowering the AGV rack 8 onto the floor surface.

The sensor 77 includes a plurality of reflection sensors. Each reflection sensor is attached around the AGV 7. Each reflection sensor emits laser light, detects a time from the emission of the laser light to the return of the laser light reflected by the object, detects a distance to the object based on the detected time, and notifies the processor 71 of a detection signal. The processor 71 outputs a control signal for controlling the traveling of the AGV 7 based on the detection signal from the sensor 77. For example, the processor 71 outputs a control signal for deceleration, stopping, or the like to avoid collision with the object based on the detection signal from the sensor 77. Note that a camera may be provided other than the sensor 77, and the camera may capture an image of the surrounding and output the captured image to the processor 71. In this case, the processor 71 analyzes the captured image and outputs the control signal for deceleration, stopping, or the like to avoid collision with the object.

The battery 78 supplies necessary electric power to the driving unit 76 and the like. The charging mechanism 79 is a mechanism that connects a charging station and the battery 78, and the battery 78 is charged with electric power supplied from the charging station or the like via the charging mechanism 79.

Next, the takeout device 5 will be described.

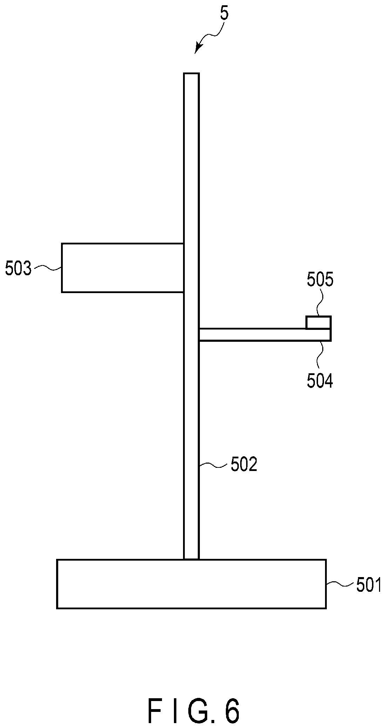

FIG. 6 is a side view of the takeout device 5.

As shown in FIG. 6, the takeout device 5 includes a base 501. The base 501 functions as a support mechanism that supports the entire takeout device 5.

The base 501 is formed with a member 502 extending upward. For example, the member 502 is formed by two rod-shaped members extending upward and rod-shaped members formed across the aforementioned members. That is, the member 502 is formed in a ladder shape.

The member 502 is formed with a rear tray 503. The rear tray 503 is a plate-like member extending in the horizontal direction from the member 502. On the rear tray 503, the case 9 is loaded.

The member 502 is formed with a shuttle part 504. The shuttle part 504 is formed in a direction opposite to the rear tray 503 with respect to the member 502. The shuttle part 504 can be moved up and down along the member 502 by a driving unit 56 or the like described later.

The shuttle part 504 (gripping mechanism) grips the case 9 located in the front (right side in FIG. 6). The shuttle part 504 loads the gripped case 9 on the rear tray 503.

Furthermore, the shuttle part 504 grips the case 9 loaded on the rear tray 503. The shuttle part 504 releases the gripped case 9 at the front.

The shuttle part 504 can acquire the case 9 from each tier of the AGV rack 8. The shuttle part 504 can set the case 9 on each tier of the AGV rack 8.

The shuttle part 504 includes a sensor 505. The sensor 505 detects the case 9 existing in the front. The sensor 505 may read a code or the like attached to the case 9. The sensor 505 may include a light or the like.

Next, a control system of the takeout device 5 will be described.

FIG. 5 is a block diagram illustrating a configuration example of the takeout device 5. The takeout device 5 includes a processor 51, a ROM 52, a RAM 53, an NVM 54, a communication unit 55, a driving unit 56, a sensor 505, and the like.

The processor 51 (first processor) has a function of controlling the operation of the entire takeout device 5. The processor 51 may include an internal cache, various interfaces, and the like. The processor 51 realizes various processes by executing programs stored in advance in the internal memory, the ROM 52, or the NVM 54.

For example, the processor 51 is a CPU. The processor 51 may be realized by hardware such as an LSI, an ASIC, or an FPGA.

The ROM 52 is a non-transitory computer-readable storage medium, and stores the programs described above. The ROM 52 stores data used by the processor 51 to perform various processes or various setting values and the like. The RAM 53 is a memory used for reading and writing data. The RAM 53 is used as a so-called work area or the like which the processor 51 temporarily uses in performing various processes.

The NVM 54 is a non-transitory computer-readable storage medium, and may store the programs described above. The NVM 54 stores data used by the processor 51 to perform various processes, data generated through the process performed by the processor 51, or various setting values and the like.

The communication unit 55 (communication interface) is an interface that transmits and receives data to and from the WES 10 or the like. The communication unit 55 is connected to the WES 10 or the like via a network or the like. For example, the communication unit 55 supports wireless LAN connection.

The driving unit 56 drives the shuttle part 504. For example, the driving unit 56 moves the shuttle part 504 in the vertical direction. The driving unit 56 causes the shuttle part 504 to perform gripping operation. The driving unit 56 is a motor or the like that drives the shuttle part 504.

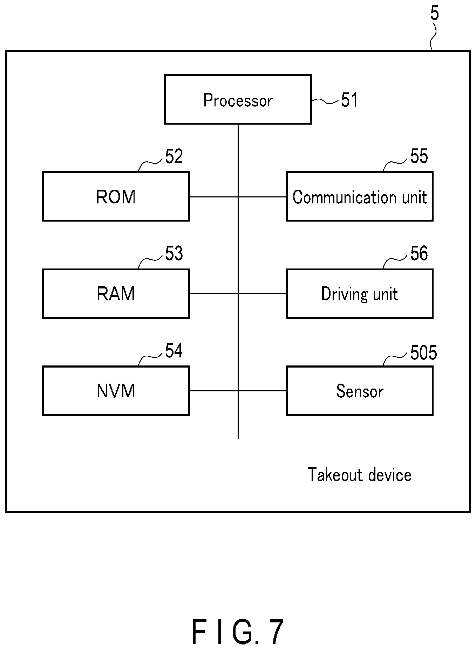

The takeout device 5 may include other configurations as needed in addition to the configuration illustrated in FIGS. 6 and 7, or a specific configuration may be excluded from the takeout device 5.

Next, functions realized by the WES 10 will be described. The functions realized by the WES 10 are realized by the processor 11 executing a program stored in the internal memory, the ROM 12, or the NVM 14.

First, the processor 11 has a function of acquiring retrieval orders to be processed in a predetermined period.

The processor 11 receives retrieval orders from the WMS 2 through the communication unit 15. Upon receiving the retrieval orders, the processor 11 selects retrieval orders to be processed in a predetermined period (for example, the next day).

For example, the processor 11 selects retrieval orders to be processed in a predetermined period based on the deadline of the retrieval orders.

The processor 11 has a function of acquiring article information of articles to be picked according to the selected retrieval orders.

Upon selecting the retrieval orders, the processor 11 transmits, to the WMS 2 through the communication unit 15, a request for requesting article information of articles to be picked according to the selected retrieval orders.

The processor 11 receives the article information as a response to the request through the communication unit 15.

The processor 11 has a function of selecting two cases 9 to be swapped (a set of a swap-source case 9 and a swap-destination case 9) based on the article information and the like.

Herein, it is assumed that the processor 11 acquires the inventory information from the rack transport system 20 through the rack transportation system interface 19.

The processor 11 selects a swap-source case 9 and a swap-destination case 9 from the same line (cases 9 facing the same side) of the AGV rack 8. Furthermore, the processor 11 selects a swap-source case 9 and a swap-destination case 9 that are stored at different heights.

The processor 11 selects two cases 9 so as to enhance the efficiency of processing of the retrieval order. That is, the processor 11 selects two cases 9 such that the case 9 storing the article of the retrieval order is stored in the efficiency improvement area.

For example, the processor 11 selects, based on inventory information, a case 9 storing the article of the retrieval order as a swap-source case 9 from cases 9 of the theft prevention area.

Upon selecting the swap-source case 9, the processor 11 selects a case 9 not including the article of the retrieval order as a swap-destination case 9 from cases 9 of the efficiency improvement area of the AGV rack 8 storing the swap-source case 9.

The processor 11 may select a swap-source case 9 from the cases 9 of the efficiency improvement area. For example, the processor 11 may select a swap-source case 9 and a swap-destination case 9 such that a case 9 with an earlier retrieval time of the retrieval order is stored at a higher position.

Furthermore, the processor 11 selects two cases 9 so as to prevent theft of an article. That is, the processor 11 selects two cases 9 such that a case 9 storing an article with a high theft risk is stored in the theft prevention area.

For example, the processor 11 selects an article (at-risk article) having a theft risk equal to or higher than a predetermined threshold value based on the article information. Upon selecting the at-risk article, the processor 11 selects a case 9 storing the at-risk article as a swap-source case 9 from cases 9 of the efficiency improvement area based on the inventory information.

Upon selecting the swap-source case 9, the processor 11 selects a case 9 not storing an at-risk article as a swap-destination case 9 from cases 9 of the theft prevention area of the AGV rack 8 storing the swap-source case 9. For example, the processor 11 selects, as the swap-destination case 9, a case 9 that is stored at a higher position as the theft risk becomes higher. That is, the processor 11 selects a swap-destination case 9 such that the at-risk article having a higher theft risk is stored at a higher position.

The processor 11 may select a swap-source case 9 from the cases 9 of the theft prevention area. For example, the processor 11 may select the swap-source case 9 and the swap-destination case 9 such that the at-risk article having a higher theft risk is stored at a higher position.

Herein, the processor 11 selects the swap-source case 9 and the swap-destination case 9 by giving priority to efficiency of processing of the retrieval order over prevention of theft. That is, in a case where the article of the retrieval order is an at-risk article, the processor 11 selects a swap-source case 9 and a swap-destination case 9 such that a case 9 storing the at-risk article is stored in the efficiency improvement area.

The processor 11 sets one or more sets of the swap-source case 9 and the swap-destination case 9 according to the above operation.

The processor 11 has a function of swapping a set of cases 9 to be swapped.

Upon setting a set of the swap-source case 9 and the swap-destination case 9, the processor 11 sets one unprocessed set. Upon setting one unprocessed set, the processor 11 specifies an AGV rack 8 that stores cases 9 (a swap-source case 9 and a swap-destination case 9) of the set that has been set.

Upon specifying the AGV rack 8, the processor 11 causes the rack transport system 20 to transport the specified AGV rack 8 to the takeout device 5 through the rack transport system interface 19.

Upon the rack transport system 20 transporting the AGV rack 8 to the takeout device 5 using the AGV 7, the processor 11 causes the takeout device 5 to swap the swap-source case 9 with the swap-destination case 9 through the takeout device interface 18. For example, the processor 11 transmits a control signal including an identifier indicating the swap-source case 9 and an identifier indicating the swap-destination case 9 to the takeout device 5 through the takeout device interface 18. The processor 11 may transmit a control signal indicating a tier (or height) on which the swap-source case 9 is stored and a tier (height) on which the swap-destination case 9 is stored to the takeout device 5 through the takeout device interface 18.

Upon the takeout device 5 swapping the swap-source case 9 and the swap-destination case 9, the processor 11 transmits a notification indicating that the swap is completed to the rack transport system 20 through the rack transport system interface 19. For example, the notification includes an identifier indicating the swap-source case 9 and an identifier indicating the swap-destination case 9. For example, the rack transport system 20 may update the inventory information based on the notification.

Upon transmitting the notification to the rack transport system 20, the processor 11 causes the rack transport system 20 to transport the AGV rack 8 to a predetermined return position (e.g., the original position) through the rack transport system interface 19.

The processor 11 similarly swaps the swap-source case 9 and the swap-destination case 9 for each set.

Next, functions realized by the takeout device 5 will be described. The functions realized by the takeout device 5 are realized by the processor 51 executing a program stored in the internal memory, the ROM 52, the NVM 54, or the like.

The processor 51 has a function of swapping the swap-source case 9 and the swap-destination case 9 under the control of the WES 10.

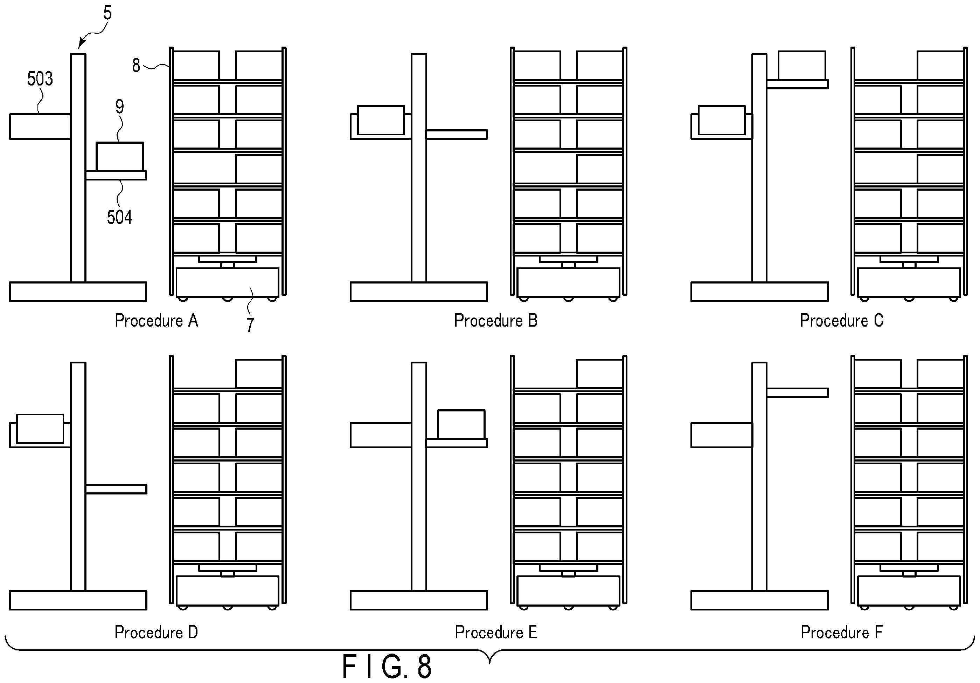

FIG. 8 shows an operation example of the takeout device 5 swapping the swap-source case 9 and the swap-destination case 9.

As described above, the processor 11 of the WES 10 transmits a control signal including an identifier indicating the swap-source case 9 and an identifier indicating the swap-destination case 9 to the takeout device 5 through the takeout device interface 18.

The processor 51 receives the control signal through the communication unit 55. Upon receiving the control signal, the processor 51 controls the driving unit 56 to move the shuttle part 504 to the height of the swap-destination case 9. Upon moving the shuttle unit 504, the processor 51 grips the swap-destination case 9 using the shuttle part 504 (procedure A).

Upon gripping the swap-destination case 9, the processor 51 loads the swap-destination case 9 onto the rear tray 503 using the shuttle part 504 (procedure B). Upon loading the swap-destination case 9 onto the rear tray 503, the processor 51 controls the driving unit 56 to move the shuttle part 504 to the height of the swap-source case 9. Upon moving the shuttle part 504, the processor 51 grips the swap-source case 9 using the shuttle part 504 (procedure C).

Upon gripping the swap-source case 9, the processor 51 controls the driving unit 56 to move the shuttle part 504 to the height of the tier on which the swap-destination case 9 is stored. Upon moving the shuttle part 504, the processor 51 sets the swap-source case 9 on the tier using the shuttle part 504 (procedure D).

Upon setting the swap-source case 9, the processor 11 grips the swap-destination case 9 from the rear tray 503 using the shuttle part 504 (procedure E). Upon gripping the swap-destination case 9, the processor 51 controls the driving unit 56 to move the shuttle part 504 to the height of the tier on which the swap-source case 9 is stored. Upon moving the shuttle part 504, the processor 51 sets the swap-destination case 9 on the tier using the shuttle part 504 (procedure F).

The processor 11 repeats the above operation according to the control signal from the WES 10.

Next, an operation example of the WES 10 will be described.

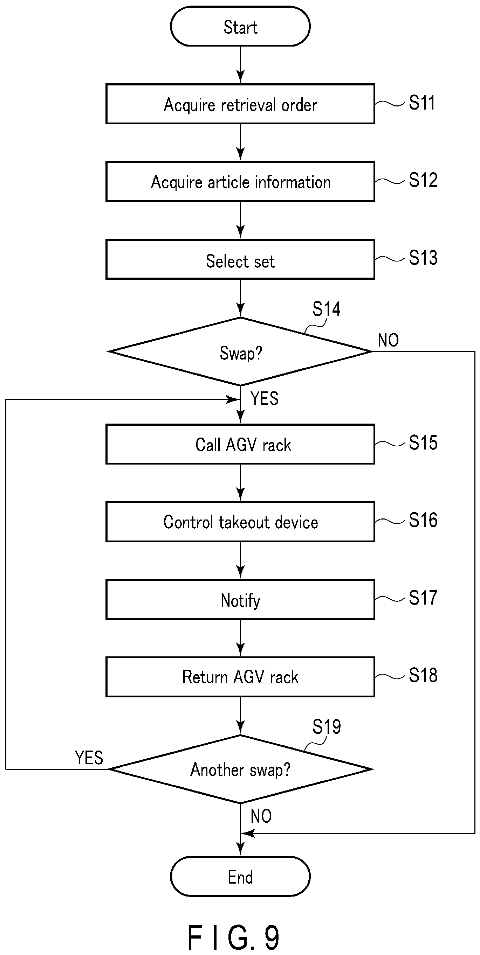

FIG. 9 is a flowchart illustrating an operation example of the WES 10. For example, the WES 10 executes the following operation in a period in which the picking process is not performed (for example, at night).

First, the processor 11 of the WES 10 acquires a retrieval order to be processed in a predetermined period (S11). Upon acquiring the retrieval order, the processor 11 acquires article information on an article of the retrieval order from the WMS 2 through the communication unit 15 (S12).

Upon acquiring the article information, the processor 11 selects a set of a swap-destination case 9 and a swap-source case 9 based on the article information, etc. (S13). Upon selecting the set, the processor 11 determines whether there is a selected set (S14).

Upon determining that there is a set (S14, YES), the processor 11 causes the rack transport system 20 to transport the AGV rack 8 storing cases 9 of the set to the takeout device 5 through the rack transport system interface 19 (S15).

Upon the rack transport system 20 transporting the AGV rack 8 to the takeout device 5, the processor 11 causes the takeout device 5 to swap the swap-destination case 9 and the swap-source case 9 through the takeout device interface 18 (S16).

Upon causing the takeout device 5 to swap the swap-destination case 9 and the swap-source case 9, the processor 11 transmits a notification indicating that the swap is completed to the rack transport system 20 through the rack transport system interface 19 (S17).

Upon transmitting the notification to the rack transport system 20, the processor 11 causes the rack transport system 20 to transport the AGV rack 8 to a predetermined return position through the rack transport system interface 19 (S18).

Upon the AGV rack 8 being transported to the predetermined return position, the processor 11 determines whether there is an unprocessed set (S19). Upon determining that there is an unprocessed set (S19, YES), the processor 11 returns to S15.

Upon determining that there is no unprocessed set (S19, NO), the processor 11 ends the operation.

Next, an operation example of the takeout device 5 will be described.

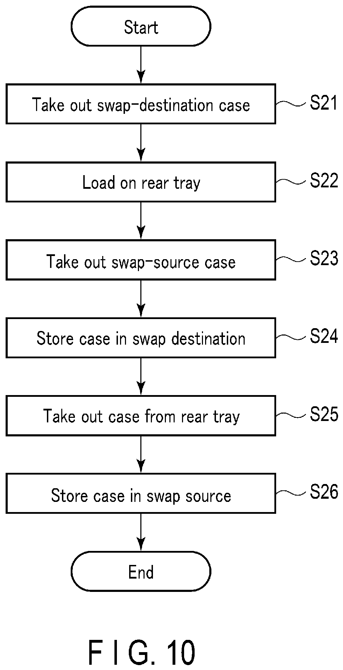

FIG. 10 is a flowchart illustrating an operation example of the takeout device 5.

First, the processor 51 of the takeout device 5 grips the swap-destination case 9 using the shuttle part 504 (S21). Upon gripping the swap-destination case 9, the processor 51 loads the swap-destination case 9 on the rear tray 503 using the shuttle part 504 (S22).

Upon loading the swap-destination case 9 on the rear tray 503, the processor 51 grips the swap-source case 9 using the shuttle part 504 (S23). Upon gripping the swap-source case 9, the processor 51 sets the swap-source case 9 on the tier on which the swap-destination case 9 was stored using the shuttle part 504 (S24).

Upon setting the swap-source case 9, the processor 51 grips the swap-destination case 9 from the rear tray 503 using the shuttle part 504 (S25). Upon gripping the swap-destination case 9 from the rear tray 503, the processor 51 sets the swap-destination case 9 on the tier on which the swap-source case 9 was stored using the shuttle part 504 (S26).

Upon setting the swap-destination case 9, the processor 51 ends the operation.

The processor 51 repeats S21 to S26 according to the control signal from the WES 10.

The processor 11 of the WES 10 may select a swap-destination case 9 from a line (a case 9 facing the other side) different from the line on which the swap-source case 9 is loaded in the AGV rack 8. In this case, the processor 11 may cause the rack transport system 20 to rotate the AGV rack 8 at the timing when the takeout device 5 grips the swap-destination case 9.

The processor 11 may select a swap-destination case 9 from the cases 9 of the AGV rack 8 different from the AGV rack 8 storing the swap-source case 9. In this case, the processor 11 may cause the rack transport system 20 to replace the AGV rack 8 storing the swap-destination case 9 with the AGV rack 8 storing the swap-source case 9 at the timing when the takeout device 5 grips the swap-destination case 9.

The processor 11 may set the theft prevention area and the efficiency improvement area according to the height of the operator 113.

The processor 11 may select the swap-source case 9 and the swap-destination case 9 such that a larger or heavier article is stored at a lower position.

The control system 100 may include a plurality of takeout devices 5.

Furthermore, the takeout device 5 may be movable. In this case, the processor 11 of the WES 10 may cause the takeout device 5 to swap the cases 9 after moving the takeout device 5 to the AGV rack 8.

The control system 100 may execute the picking process and the swapping of the cases 9 simultaneously in parallel.

The control system configured as described above displaces the case storing the article to be picked to the range within the reach of the operator based on the retrieval order. Therefore, the control system can allow the operator to efficiently pick the article.

Furthermore, the control system displaces the case storing the article having a high risk of being stolen to the range out of reach of the operator based on the article information. Therefore, the control system can prevent theft of the article.

The program according to the present embodiment may be transferred in a state of being stored in an electronic device or in a state of not being stored in an electronic device. In the latter case, the program may be transferred through a network or may be transferred in a state of being stored in a storage medium. The storage medium is a non-transitory tangible medium. The storage medium is a computer-readable medium. The storage medium may be of any type, such as a CD-ROM or a memory card, as long as it can store programs and can be read by the computer.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An information processing apparatus comprising:
a first interface configured to acquire a retrieval order for picking articles from cases;
a second interface connected to a takeout device configured to swap the cases stored at different heights; and
a processor configured to:
select two of the cases stored at different heights based on the retrieval order; and
cause the takeout device to swap the selected two cases through the second interface.

2. The information processing apparatus according to claim 1, wherein
the processor is configured to select, as the two cases, the case that stores the article indicated by the retrieval order and the case that is stored at a position lower than a predetermined height.

3. The information processing apparatus according to claim 2, wherein
the predetermined height is a height within reach of an operator picking the articles.

4. The information processing apparatus according to claim 3, wherein
the processor is configured to select the two cases based on article information indicating a risk of the articles being stolen.

5. The information processing apparatus according to claim 4, wherein
the processor is configured to select, as the two cases, the case that stores an article having the risk equal to or higher than a predetermined threshold value and the case that is stored at a position higher than the predetermined height.

6. The information processing apparatus according to any one of claims 1 to 5, wherein
the processor is configured to select, as the two cases, two of the cases that are stored on a same rack.

7. The information processing apparatus according to claim 6, wherein
the processor is configured to select, as the two cases, two of the cases that are positioned on a same side in the rack.

8. The information processing apparatus according to claim 1, comprising:
a third interface connected to a rack transport system transporting a rack that stores the cases,
wherein the processor is configured to cause, through the third interface, the rack transport system to transport a rack that stores the two cases to the takeout device.

9. The information processing apparatus according to claim 8, wherein
the processor is configured to cause, through the third interface, the rack transport system to transport the rack to a station where the articles are picked.

10. The information processing apparatus according to claim 9, wherein
the processor is configured to cause, through the second interface, the takeout device to swap the selected two cases in a period in which picking of the articles is not performed.

11. An information processing method executed by a processor, the method comprising:
acquiring a retrieval order for picking articles from cases;
selecting two of the cases stored at different heights based on the retrieval order; and
causing a takeout device configured to swap the cases to swap the selected two cases.

12. A program executed by a processor, the program causing the processor to execute:
a function of acquiring a retrieval order for picking articles from cases;
a function of selecting two of the cases stored at different heights based on the retrieval order; and
a function of causing a takeout device configured to swap the cases to swap the selected two cases.

13. A system comprising a takeout device and an information processing apparatus,
the takeout device comprising:
a communication interface connected to the information processing apparatus;
a gripping mechanism configured to grip cases storing articles; and
a first processor configured to swap two of the cases stored at different heights using the gripping mechanism under a control of the information processing apparatus,
the information processing apparatus comprising:
a first interface configured to acquire a retrieval order for picking the articles;
a second interface connected to the takeout device; and
a second processor configured to:
select the two cases stored at different heights based on the retrieval order; and
cause the takeout device to swap the selected two cases through the second interface.

14. A non-transitory computer-readable storage medium storing a program executed by a processor,
the program causing the processor to execute:
a function of acquiring a retrieval order for picking articles from cases;
a function of selecting two of the cases stored at different heights based on the retrieval order; and
a function of causing a takeout device configured to swap the cases to swap the selected two cases.
